# NEUE EUROPÄISCHE PATENTSCHRIFT

(11) **EP 3 099 618 B2**
(45) Veröffentlichungstag und Bekanntmachung des Hinweises auf die Entscheidung über den Einspruch: **06.03.2024**
(45) Hinweis auf die Patenterteilung: 06.12.2017
(21) Anmeldenummer: 15707856.9
(22) Anmeldetag: 29.01.2015
(51) Int. Cl.: B66C 13/56, B66C 13/48, B66C 23/58

(54) **KRANSTEUERUNG**
CRANE CONTROLLER
COMMANDE DE GRUE

(30) Priorität: 31.01.2014 AT 442014 U
(43) Veröffentlichungstag der Anmeldung: 07.12.2016
(73) Patentinhaber: Palfinger AG, 5101 Bergheim bei Salzburg (AT)
(72) Erfinder: DEIMER, Thomas, A-5141 Moosdorf (AT)
(74) Vertreter: Torggler & Hofmann Patentanwälte - Innsbruck
(86) Internationale Anmeldenummer: PCT/AT2015/000013
(87) Internationale Veröffentlichungsnummer: WO 2015/113084

(56) Entgegenhaltungen:
- EP-A1- 2 388 228
- DE-U1-202010 014 309
- US-A- 5 731 974
- US-A1- 2004 073 358

## Beschreibung

Die vorliegende Erfindung betrifft eine Kransteuerung mit den Merkmalen des Oberbegriffs des Anspruchs 1, einen Kran, insbesondere Ladekran, mit einer solchen Kransteuerung sowie ein Fahrzeug mit einem derartigen Kran.

Alle Krane weisen einen Betriebsmodus auf, in welchem die Krangeometrie, das heißt die relative Stellung der Kranarme zueinander in einer Ebene bzw. relativ zu einer Kransäule und die Schwenkstellung der Kranarme samt Kransäule relativ zu einem Kransockel, durch einen Benutzer frei veränderbar ist. Der Benutzer kann beispielsweise durch Betätigen von Bedienelementen die relative Stellung der Kranarme ändern und die Kranarme samt Kransäule relativ zum Kransockel verschwenken. Im Hintergrund wird der Kranbetrieb durch Sicherheitsvorrichtungen überwacht, welche bei Betätigung von Bedienelementen durch den Benutzer, die zu einem sicherheitskritischen Zustand führen, eingreifen. Zum Beispiel kann die Standsicherheit des Krans überwacht werden.

Es sind auch bereits gattungsgemäße Krane bekannt geworden, deren Kransteuerung einen ersten Betriebsmodus aufweist, in welchem der Kran durch einen Benutzer mittels Steuerbefehlen frei bedienbar ist und einen zweiten, durch den Benutzer aktivierbaren Betriebsmodus aufweist, in welchem die Krangeometrie in einer vorbestimmten Abfolge von Bewegungen durch die Kransteuerung veränderbar ist. Der zweite Betriebsmodus dient dazu, einen Kran in vorbestimmter Weise aus einer Parkierposition in eine Arbeitsposition zu bringen bzw. den Kran in vorbestimmter Weise aus einer gegebenenfalls vorbestimmten Arbeitsposition in die Parkierposition zu bringen.

Diese gattungsgemäßen Krane weisen einen Totmannschalter als Bedienelement auf, welcher zum Aktivieren des zweiten Betriebsmodus und zur Beibehaltung des zweiten Betriebsmodus ständig zu drücken ist.

Allgemein im Stand der Technik bekannte Krane gehen beispielsweise aus der EP 2 388 228 A1, der US 5 731 974 A, der DE 20 2010 014309 U1 und der US 2004/073358 A1 hervor.

Aufgabe der Erfindung ist es eine gattungsgemäße Kransteuerung, einen Kran mit einer solchen Kransteuerung und ein Fahrzeug mit einem solchen Kran bereitzustellen, welche einen komfortableren und den Benutzer durch eine vorbestimmte Abfolge von Bewegungen zur Erreichung der Parkier- bzw. Arbeitsposition unterstützenden Betrieb gestattet.

Diese Aufgabe wird durch eine Kransteuerung mit den Merkmalen des Anspruchs 1, einen Kran mit einer solchen Kransteuerung nach Anspruch 16 und einem Fahrzeug mit einem solchen Kran nach Anspruch 17 gelöst.

Dadurch, dass die Kransteuerung eine menügeführte Benutzerschnittstelle aufweist, wobei die menügeführte Benutzerschnittstelle eine durch den Benutzer wählbare Funktion aufweist, durch welche die Kransteuerung vom ersten in den zweiten Betriebsmodus wechselt, werden die Ziele der Aufgabenstellung erreicht.

Vorteilhafte Ausführungen der Erfindung sind in den abhängigen Ansprüchen definiert.

Weiters ist bevorzugt vorgesehen, dass die Kransteuerung die vorbestimmte Abfolge von Bewegungen der Krangeometrie einen 2. Knickarm (Fly Jib) mitberücksichtigt und entsprechend ansteuert und positioniert, um die Parkierpostion bzw. Arbeitsposition zu erreichen.

Besonders bevorzugt ist weiters, dass die Kransteuerung bei vorhandenem 2. Knickarm (Fly-Jib oder anderen detektierbaren Krankonfigurationen) automatisch unterschiedliche Zwischenpositionen und auch unterschiedliche Arbeitspositionen bei einer vorbestimmten Abfolge von Bewegungen der Krangeometrie ansteuert und somit die vorbestimmte Abfolge von Bewegungen der Krangeometrie eine krankonfigurationsabhängige Trajektorie beschreibt.

Ebenfalls kann vorgesehen sein, dass es durch eine Anzeige der Hebelbelegung, entsprechender Aktivierung und Deaktivierung der Bedienelemente durch die Kransteuerung es zu einer Reduktion der Gefahr von ungewollten Fehlbedienungen durch den Benutzer kommt, was die Sicherheit erhöht.

In einem besonders bevorzugten Ausführungsbeispiel ist vorgesehen, dass zu jedem beliebigen Zeitpunkt, während die Kransteuerung sich im zweiten Betriebsmodus befindet, durch Betätigen eines Schalters (beispielsweise Totmannschalter am Steuerpult), die Kransteuerung die Abfolge der Veränderungen der Krangeometrie pausiert und alle Bedienelemente ihre ursprüngliche Funktionsbelegung erhalten. Dabei kann der Benutzer manuell eine allfällige Korrektur der Krangeometrie durchführen (zum Beispiel ein Hindernis umfahren). Nach Beendigung der Betätigung des Schalters werden selbständig durch die Kransteuerung wieder alle Bedienelemente gesperrt und nur die Geschwindigkeitsvorgabe ist möglich, um nach erneuter und positiver Sicherheitsprüfung durch die Kransteuerung die unterbrochene Abfolge fortsetzen zu können.

Bevorzugt ist vorgesehen, dass die Kransteuerung bei der vorbestimmten Abfolge von Bewegungen der Krangeometrie eine Parkierposition des Krans immer aus einer vorbestimmten Drehrichtung einer Kransäule des Krans relativ zu einem Kransockel des Krans aus anfährt. So kann sichergestellt werden, dass zum Ausgleich von etwaigen Maßtoleranzen sich die Kransäule immer aus derselben Drehrichtung und auch zusätzlich aus demselben Winkelbereich heraus in die Parkierposition bewegt.

Weitere Vorteile und Einzelheiten der Erfindung sowie verschiedene Ausführungsformen werden anhand der vorliegenden Figuren diskutiert. Dabei zeigen:
- Fig. 1a: das Hauptmenü einer menügeführten Benutzerschnittstelle einer Kransteuerung nach der Erfindung,
- Fig. 1b: ein Untermenü des Hauptmenüs der Figur 1a,
- Fig. 1c: eine Sicherheitsabfrage der menügeführten Benutzerschnittstelle,
- Fig. 1d: eine weitere Ausführung eines Untermenüs des Hauptmenüs der Figur 1a,
- Fig. 1e: eine weitere Ausführung einer Sicherheitsabfrage der menügeführten Benutzerschnittstelle,
- Fig. 1f: eine weitere Ausführung eines Untermenüs des Hauptmenüs der Figur 1a,
- Fig. 1g: eine weitere Ausführung einer Sicherheitsabfrage der menügeführten Benutzerschnittstelle,
- Fig. 2: eine perspektivische Darstellung eines Fahrzeugs mit darauf angeordnetem Kran,
- Fig. 3: ein Steuerpult zur Bedienung einer erfindungsgemäßen Kransteuerung und schematisch die Kransteuerung mit der Kransensorik,
- Fig. 4a bis 4g: Schematisch eine Abfolge von Veränderungen der Krangeometrie verursacht durch eine erfindungsgemäße Kransteuerung, welche sich im zweiten Betriebsmodus befindet, ausgehend von einer Arbeitsposition und endend in einer Parkierposition,
- Fig. 5a bis 5d: schematisch eine Abfolge von Veränderungen der Krangeometrie verursacht durch eine erfindungsgemäße Kransteuerung, welche sich im zweiten Betriebsmodus befindet, ausgehend von einer Parkierposition und endend in einer Arbeitsposition.

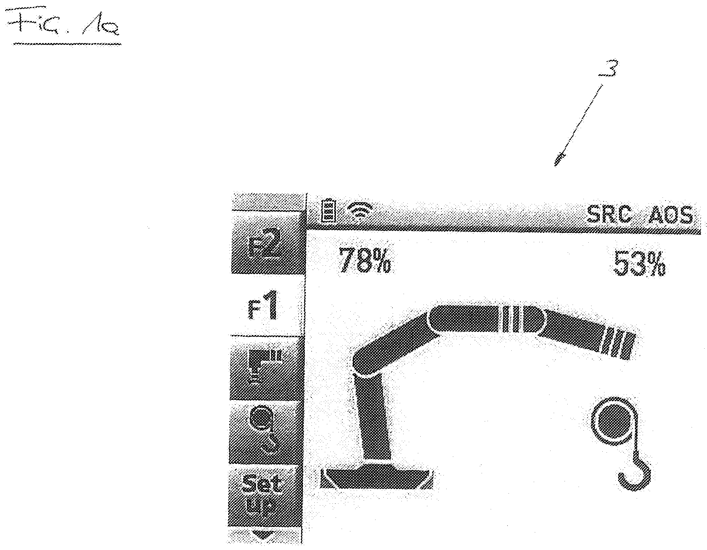

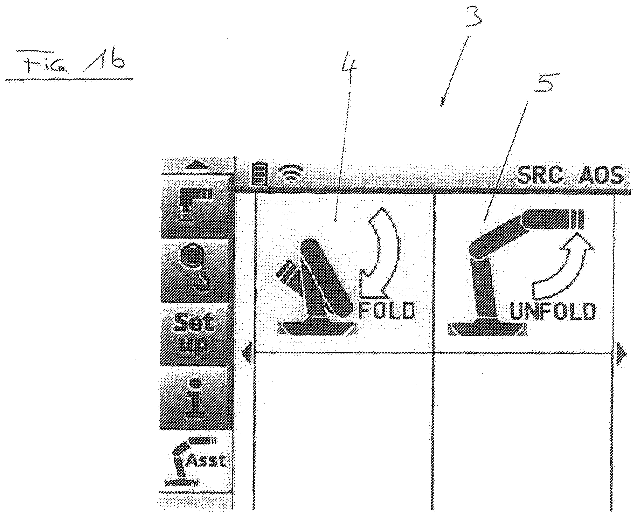

Figur 1a zeigt das Hauptmenü der menügeführten Benutzerschnittstelle der Kransteuerung. Das Hauptmenü weist auswählbare Untermenüpunkte auf, in diesem bevorzugten Ausführungsbeispiel eine am linken Rand des Hauptmenüs angeordnete Menüleiste. In das Untermenü "Aktivierung des zweiten Betriebsmodus" (Figur 1b) gelangt man durch Auswahl des entsprechenden Icons.

Figur 1b zeigt die beiden Wahlmöglichkeiten für die Aktivierung des zweiten Betriebsmodus, nämlich "Parkierposition" und "Arbeitsposition". Eine Auswahl der Wahlmöglichkeit "Parkierposition" bewirkt nach einer positiv absolvierten Überprüfung der Sicherheitssituation, insbesondere der aktuellen Krangeometrie und des Rüstzustandes des Krans, durch die Kransteuerung und den Benutzer eine Abfolge von Veränderungen der Krangeometrie, ausgehend von einer "Arbeitsposition" und endend in einer "Parkierposition". Eine Auswahl der Wahlmöglichkeit "Arbeitsposition" bewirkt nach einer positiv absolvierten Überprüfung der Sicherheitssituation, insbesondere der aktuellen Krangeometrie und des Rüstzustandes des Krans, durch die Kransteuerung und den Benutzer eine Abfolge von Veränderungen der Krangeometrie, ausgehend von einer "Parkierposition" und endend in einer "Arbeitsposition".

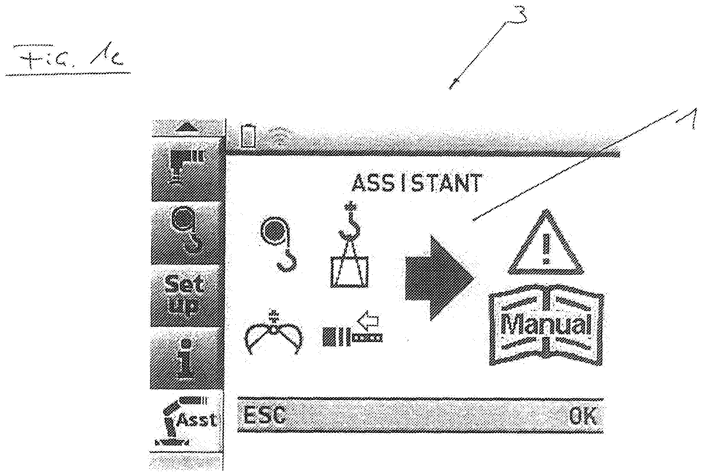

Figur 1c zeigt eine Sicherheitsabfrage der menügeführten Benutzerschnittstelle, welche in diesem Ausführungsbeispiel beim Übergang von der translatorischen in die rotatorischen Bewegungsphase der Veränderung der Krangeometrie erscheint. Verknüpft damit wird die Veränderung der Krangeometrie pausiert. Die Kransteuerung verbleibt dabei im zweiten Betriebsmodus und wartet auf die Bestätigung durch den Benutzer. Sinn und Zweck der Sicherheitsabfrage besteht in diesem Ausführungsbeispiel darin, den Benutzer zu einer visuellen Überprüfung der Sicherheitssituation zu veranlassen. Dies kann zum Beispiel beinhalten:
- Überprüfung des Rüstzustandes des Kranes hinsichtlich nicht von der Kransteuerung selbständig erfassbarer Zusatzausrüstungen oder Lasten, zum Beispiel ist ein allfälliges Lastaufnahmemittel schon demontiert, befindet sich noch eine Last am Kran?
- Überprüfung des Rüstzustandes der Führung des Lastseiles und dessen Seilwinde
- Überprüfung des Kranes auf vollständig eingefahrene Schubsysteme und manuelle Auslegerverlängerungen (des Kranes und eines allfälligen Fly-Jibs)
- Überprüfung der räumlichen Gegebenheiten. Steht genügend Platz zur Durchführung der Abfolge der Veränderungen der Krangeometrie in die "Parkierposition" bzw. "Arbeitsposition" zur Verfügung?

Nach erfolgter Bestätigung durch den Benutzer setzt die Kransteuerung die Abarbeitung der verbleibenden Abfolge der Veränderungen der Krangeometrie zum Erreichen der gewünschten Endposition fort. Solange keine Bestätigung durch den Benutzer erfolgt ist, verbleibt die Kransteuerung im zweiten Betriebsmodus, veranlasst aber keine Bewegungen. Bleibt innerhalb einer vorgegebenen Zeitspanne die Bestätigung durch den Benutzer aus, wird die Funktion abgebrochen und die Kransteuerung beendet den zweiten Betriebsmodus. Für einen Wechsel in den ersten Betriebsmodus ist in diesem bevorzugten Beispiel wiederum die Bestätigung durch den Benutzer notwendig.

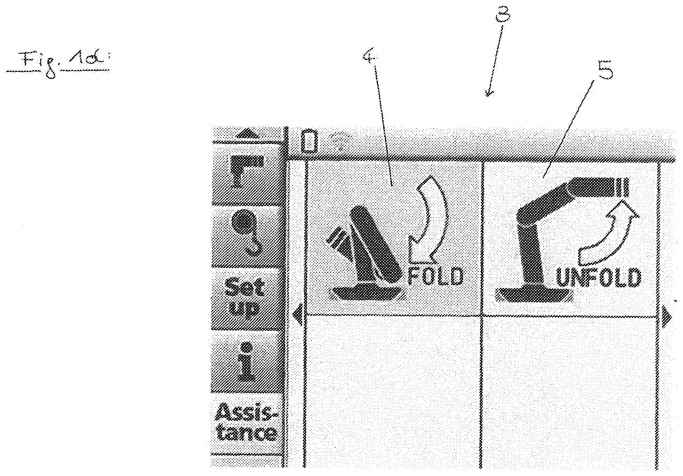

Figur 1d zeigt eine weitere Ausführung eines Untermenüs mit den beiden Wahlmöglichkeiten für die Aktivierung des zweiten Betriebsmodus, die wieder "Parkierposition" und "Arbeitsposition" umfassen.

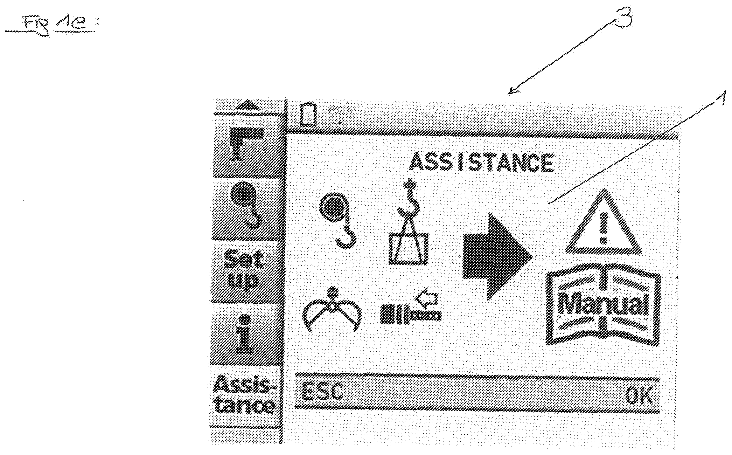

In Figur 1e ist eine weitere Möglichkeit zur Ausgestaltung einer Sicherheitsabfrage der menügeführten Benutzerschnittstelle gezeigt.

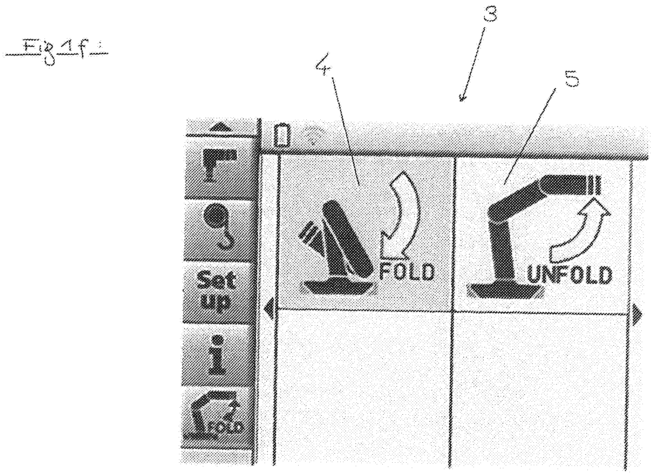

In Figur 1f ist eine weitere mögliche Ausführung eines Untermenüs mit den beiden Wahlmöglichkeiten für die Aktivierung des zweiten Betriebsmodus gezeigt, die wieder "Parkierposition" und "Arbeitsposition" umfassen.

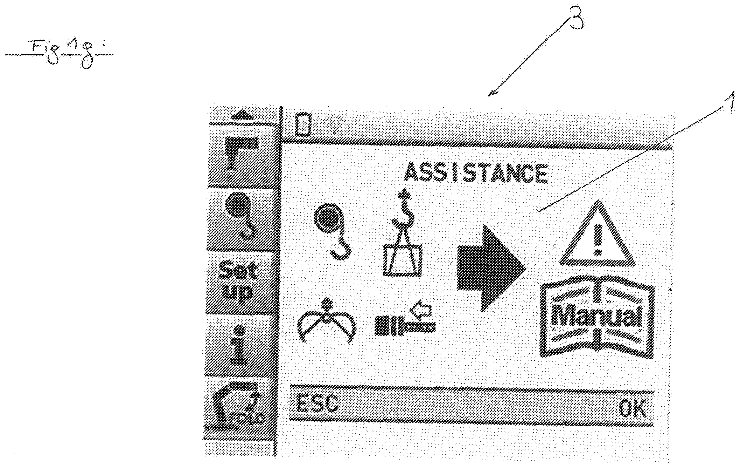

Figur 1g zeigt eine weitere Ausführung einer Sicherheitsabfrage der menügeführten Benutzerschnittstelle.

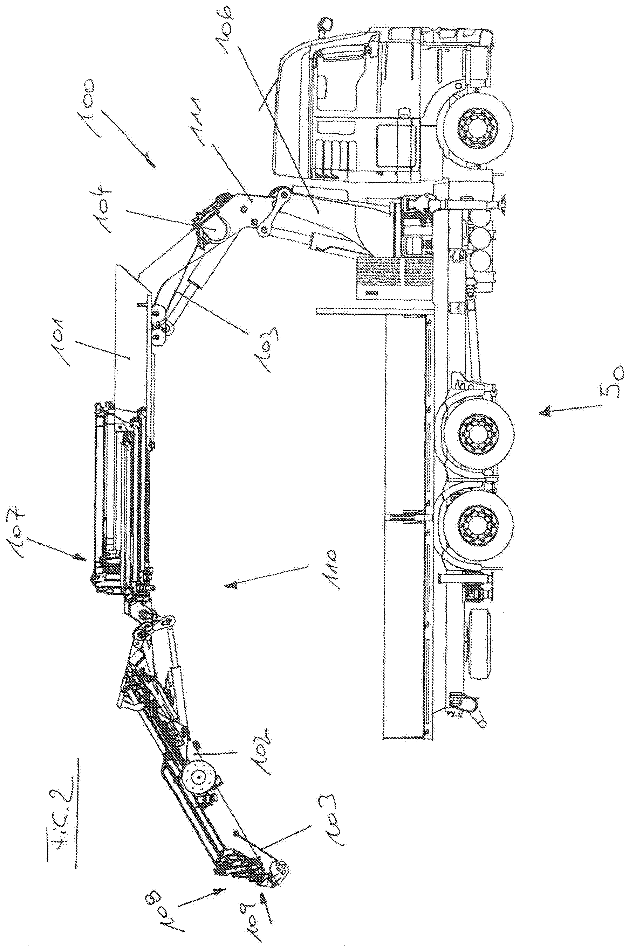

Figur 2 zeigt eine Seitenansicht eines Fahrzeuges 50, auf dem ein Fahrzeugkran 100 angeordnet ist. Das Kransystem 110 des Fahrzeugkranes 100 weist dabei den Hubarm 111 und den Knickarm 101 auf. Am Hubarm 111 ist in diesem bevorzugten Ausführungsbeispiel die Seilwinde 104 angeordnet. Diese Seilwinde 104 dient zum Heben von Lasten mittels des Lastseils 103.

Am Knickarm 101 - welcher teleskopierbar ausgebildet ist - ist ein gelenkig angeordneter zweiter Knickarm ausgebildet, welcher hier als Fly-Jib 102 ausgeführt ist. Dabei weist der Knickarm 101 mehrere Auslegerverlängerungen 107 auf und das Fly-Jib 102 weist ebenfalls mehrere Auslegerverlängerungen 108 auf. Das Ende des Kransystems 110 bildet die Kranspitze 109. Hierbei sei angemerkt, dass es sich in diesem Ausführungsbeispiel um eine Variante eines Kransystem 110 des Fahrzeugkranes 100 handelt, jede andere Ausführungsform eines Kransystems 110 ist natürlich ebenfalls vorstellbar, wie etwa beispielhaft ein Kransystem 110 mit teleskopierbaren Hubarm.

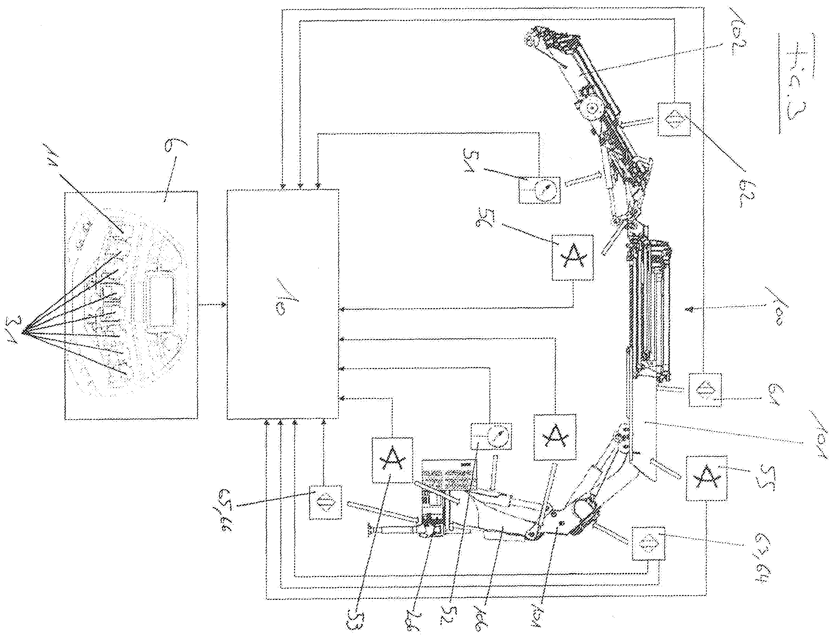

Die Figur 3 zeigt ein Steuerpult 6 zur Bedienung einer erfindungsgemäßen Kransteuerung 10 und schematisch die Kransteuerung 10. Das Steuerpult 6 weist hier bevorzugt eine Funkfernsteuerung auf. Nach Auswahl einer der beiden Wahlmöglichkeiten "Parkierposition" 4 und "Arbeitsposition" 5 durch den Benutzer, überprüft die Kransteuerung 10 selbsttätig, ob es, soweit es für die Kransteuerung 10 erfassbar ist, Sicherheitshindernisse für eine Aktivierung des zweiten Betriebsmodus gibt.

Zum Beispiel überprüft die Kransteuerung 10, ob sich die vorhandene Krangeometrie sicherheitstechnisch überhaupt als Ausgangspunkt für die vorbestimmte Abfolge der Veränderungen der Krangeometrie in die "Parkierposition" 4 bzw. "Arbeitsposition" 5 eignet. Befindet sich der Kran 100 in einer Arbeitsposition wird beispielsweise überprüft, ob der Winkel zwischen dem äußersten Arm des Krans 100 und der Kransäule 106 in einem bestimmten Bereich liegt. Es kann auch überprüft werden, ob der Schwenkwinkel der Kransäule 106 relativ zum Kransockel 206 innerhalb eines akzeptablen Bereichs liegt. Weiters kann durch die Kransteuerung 10 überprüft werden, ob sich ein Arbeitskorb am Kran 100 befindet. Für all diese Funktionen kann die allgemein bekannte Sensorik eines gattungsgemäßen Krans 100 eingesetzt werden.

Bis jetzt stehen alle Bedienhebel 11, 31 für den Benutzer zur freien Bedienung gemäß der werkseitig vorgesehen Funktionsbelegung zur Verfügung.

Befinden sich alle Bedienhebel 11, 31 in Nullstellung und hat der Benutzer seine Zustimmung gegeben, dann werden alle Bedienhebel 31 bis auf einen gesperrt, dieser eine nicht gesperrte Bedienhebel 11 dient nach Aktivierung des zweiten Betriebsmodus dazu, dass der Benutzer über die Auslenkung des Bedienhebels 11 aus der Nullstellung die Geschwindigkeit wählen kann, mit welcher die Krangeometrie verändert wird.

In den verbleibenden beiden Figuren wird nun dargestellt; wie konkret im Ausführungsbeispiel die vorgegebene Abfolge der Änderung der Krangeometrie erfolgt.

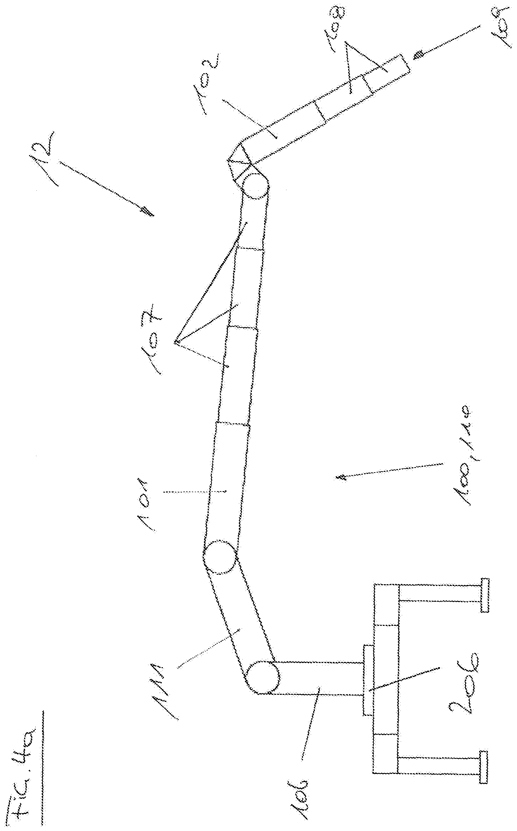

Die Figur 4a zeigt schematisch den Kran 100 in einer Arbeitsposition 12 mit ausgefahrenen Schubsystemen 107 vom Knickarm 101 und 108 vom Fly-Jib 102. Nicht erkennbar in Figur 4a (siehe aber Figur 2) ist, dass auch eine Seilwinde 104 in Arbeitsposition mit eingeschertem Seil 103 vorhanden ist.

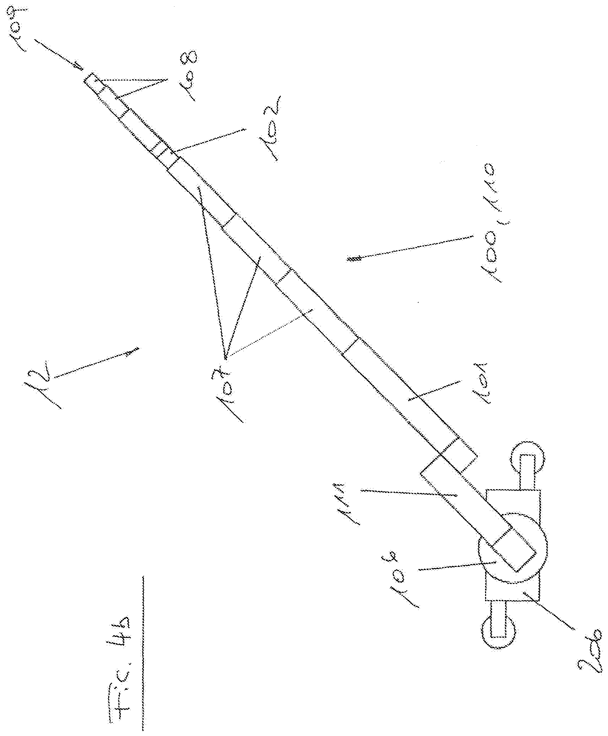

Die Figur 4b zeigt den Kran 100 in der in der Figur 4a dargestellten Arbeitsposition 12 von oben, um den Schwenkzustand der Kransäule 106 relativ zum Kransockel 206 darzustellen.

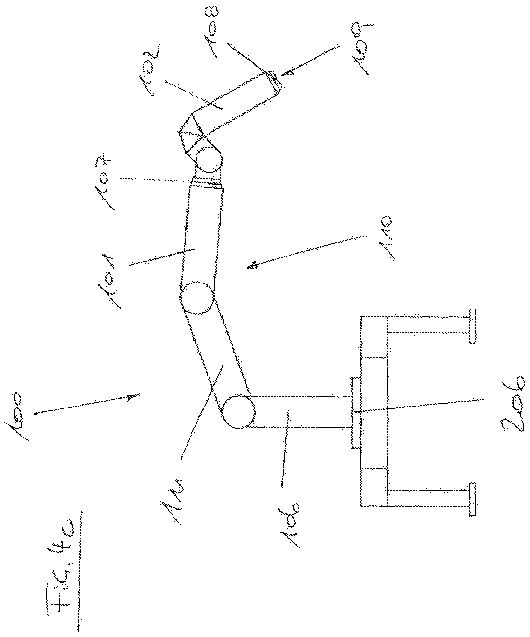

Figur 4c zeigt nach erfolgter Aktivierung des zweiten Betriebsmodus jene Krangeometrie, die sich nach Einfahren des Kransystems 110 und des Fly-Jibs 102 ergibt. Die translatorischen Veränderungen der Krangeometrie sind somit abgeschlossen. Es sind bisher noch keine rotatorischen Veränderungen der Krangeometrie (Veränderung des Schwenkzustandes der Kransäule 106 zum Kransockel 206, Veränderung der relativen Winkel zwischen den Kranarmen 101, 102, 111) erfolgt.

In diesem Ausführungsbeispiel erfolgt nunmehr die Sicherheitsabfrage 1 der Kransteuerung 10 an den Benutzer, wie in der Figur 1c geschildert.

Für das Folgende sei angenommen, dass die Sicherheitsabfrage 1 positiv erledigt wurde.

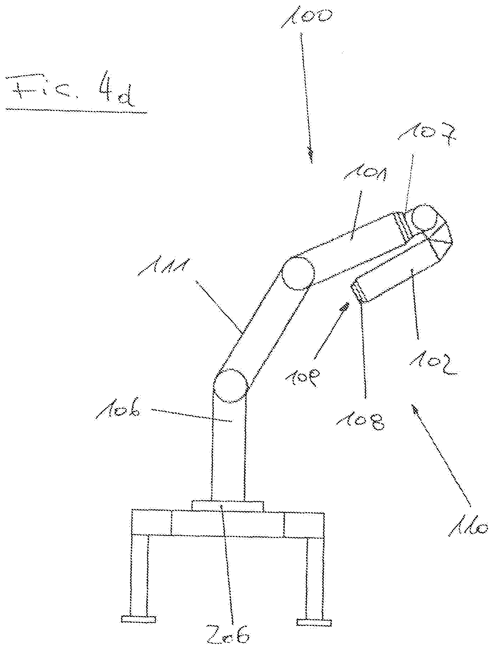

Nunmehr erfolgt eine Veränderung der relativen Winkel zwischen den Kranarmen ohne Veränderung des Schwenkzustandes der Kransäule zum Kransockel (Figur 4d). In dieser definierten Zwischenposition des Krans wird mit Hilfe des Drucksensors 52 eine Plausibilisierung der Kranauslastung durchgeführt, diese muss abhängig von der, über die Kransteuerung detektierbaren, Krankonfiguration (z.B.: ob ein Fly Jib montiert ist oder nicht) unterhalb vorgegebener Grenzwerte liegen.

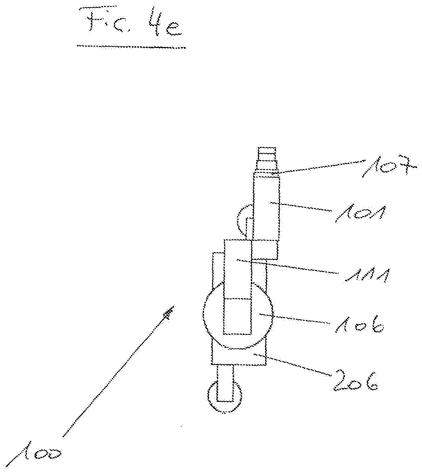

Figur 4e zeigt die Krangeometrie nach erfolgter Veränderung des Schwenkwinkels der Kransäule zum Kransockel. Beim Übergang von der Figur 4d auf die Figur 4e wird die Seilwinde ebenfalls in Parkierposition verschwenkt.

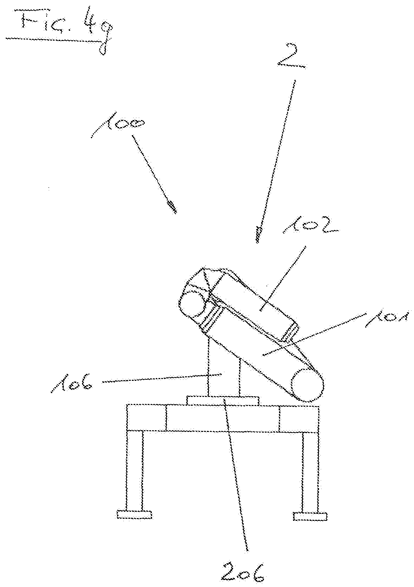

Figur 4g zeigt die Veränderung der relativen Winkel zwischen den Kranarmen 101, 102, 111 in die Parkierposition 2. Kurz vor Erreichen der Parkierposition 2 erfolgt bevorzugt ein Umschalten von einer Positionsregelung mit Hilfe der Sensoren 54 und 56 auf eine Druckregelung mit Hilfe der Drucksensoren 51 und 52, um ein allfälliges Spiel der Kranarme 102, 111 oder Ungenauigkeit der Positionsregelung zu umgehen. Die Abschaltung erfolgt bei Erreichung eines vorgegebenen Druckniveaus.

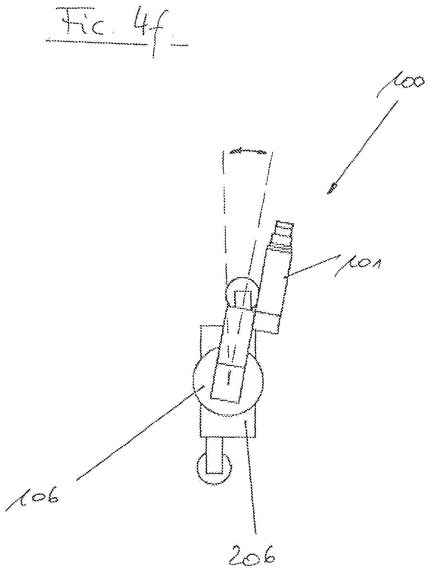

Es besteht natürlich auch ein bestimmtes Spiel in Bezug auf der Veränderung des Winkels zwischen Kransäule 106 und Kransockel 206, weshalb es bevorzugt vorgesehen ist, dass ein Verschwenken der Kransäule 106 relativ zum Kransockel 206 immer aus demselben Winkelbereich heraus erfolgt (Figur 4f), das heißt, sollte sich die Kransäule 106 von einem anderen Winkelbereich der Parkierposition 2 nähern, so wird diese überfahren, damit aus dem besagten selben Winkelbereich heraus in die Parkierposition 2 gefahren werden kann (siehe Figur 4f).

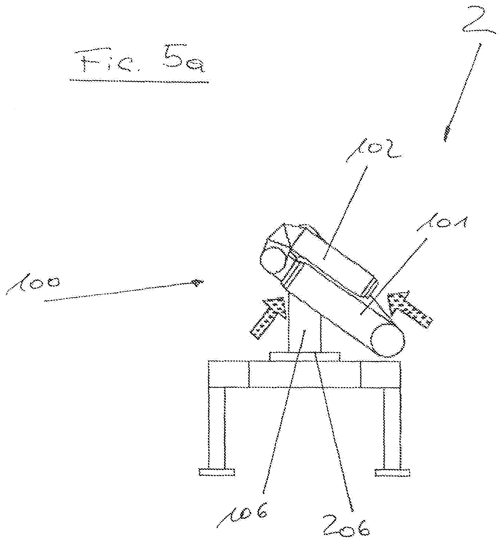

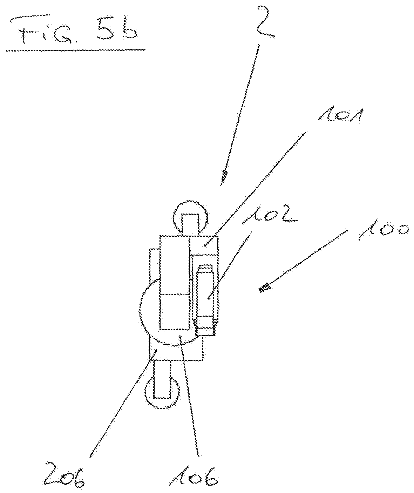

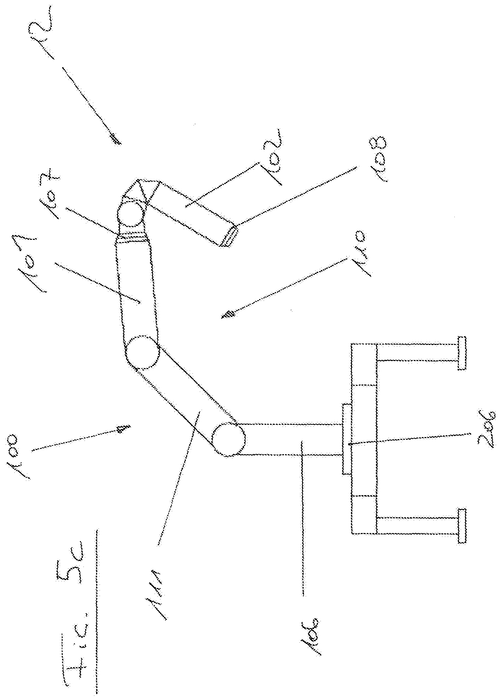

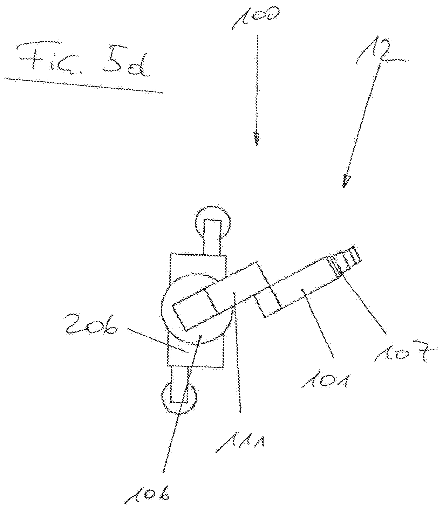

Die Figur 5 zeigt analog zur Figur 4 den vorbestimmten Übergang aus der Parkierposition 2 in die Arbeitsposition 12.

Während der vorbestimmten Abfolge von Bewegungen der Krangeometrie wird die dadurch bedingte Längenänderung des eingescherten Lastseils 103 der Seilwinde 104 automatisch ausgeglichen, indem die Seilspannung durch die Kransteuerung 10 geregelt wird. Damit wird sowohl die Schlaffseilbildung als auch eine Überlastsituation der Seilwinde 104 vermieden.

Weiters ist es vorgesehen, dass die Kransteuerung 10 ein automatisches hydraulisches Vorspannen der unterschiedlichen Schubsysteme 107 und 108 sowie auch der Hubzylinder für die Verschwenkung der Kranarme 101 und 102 ausführt.

Zu jedem beliebigen Zeitpunkt, während die Kransteuerung 10 sich im zweiten Betriebsmodus befindet, kann ein Schalter (Totmannschalter) betätigt werden, was dazu führt, dass die Kransteuerung 10 in der Abfolge der Veränderungen der Krangeometrien pausiert und alle Bedienhebel 11, 31 freigibt. Dabei kann der Benutzer manuell eine allfällige Korrektur der Krangeometrie durchführen (zum Beispiel ein Hindernis umfahren). Nach der manuellen Korrektur und der Freigabe der Totmannschaltung durch den Benutzer beginnt die Kransteuerung 10 wieder mit der Sicherheitsüberprüfung der momentan vorliegenden Krangeometrie und nimmt gegebenenfalls die unterbrochene Abfolge wieder auf.

Weiters ist es vorgesehen, dass die Kransteuerung 10 auch selbsttätig die Geschwindigkeit des Verfahrens bzw. Verschwenkens der Krangeometrie herunterregelt. Dies kommt speziell dann zum Tragen, wenn der Kran 100 sich beispielsweise dem Grenzbereich der Standsicherheit, Endanschlägen oder elektronisch einstellbaren Sperrbereichen nähert.

Vorteilhafterweise erkennt die Kransteuerung 10 neben der aktuellen Krangeometrie auch den Abstützzustand und kann somit beurteilen bzw. festlegen, ob die Standsicherheit für den Kran 100 gegeben ist.

Sowohl einzelne Zwischenpositionen während der vorbestimmten Abfolge von Bewegungen zur Erreichung der Parkier- oder Arbeitsposition als auch die Arbeitsposition selbst sind abhängig von der, über die Kransteuerung (10) detektierbare, Krankonfiguration. Darunter ist zu verstehen, dass die Kransteuerung (10) ausstattungsspezifisch auf verschiedene Parametersätze zugreift, insbesondere für die Sollwerte der Positionsregelung für die Sensoren 54 bis 56.

Die oben genannte Beschreibung im Hinblick auf die Abfolge der Sequenzen der Veränderung der Krangeometrie bezieht sich auf ein besonders bevorzugtes Ausführungsbeispiel. Darüber hinaus kann jedoch die Abfolge selbst geändert werden und zusätzliche bevorzugte Parkier- und Arbeitspositionen festgelegt werden.

So ist es bevorzugt vorgesehen, dass vom Benutzer vorzudefinierende Sequenzen in die Kranksteuerung 10 eingebracht werden können, dabei ist es angedacht, dass dies z.B. Service-Werkstätten durchführen können. Aus Sicherheitsgründen ist es dabei vorgesehen, dass die Werkstätte bzw. der Benutzer nur aus einem vorgegebenen Wertebereich diese Sequenzen wählen bzw. verändern kann bzw. auch nur Reihenfolgen der Abfolge der Bewegungen beeinflussbar sind.

## Patentansprüche

1. Kransteuerung (10) für einen Kran (100), insbesondere Ladekran, mit einem ersten Betriebsmodus, in welchem der Kran (100) durch einen Benutzer mittels Steuerbefehlen frei bedienbar ist und einem zweiten, durch den Benutzer aktivierbaren Betriebsmodus, in welchem die Krangeometrie in einer vorbestimmten Abfolge von Bewegungen durch die Kransteuerung (10) veränderbar ist, **dadurch gekennzeichnet, dass** die Kransteuerung (10) eine menügeführte Benutzerschnittstelle (3) aufweist, wobei die menügeführte Benutzerschnittstelle (3) eine durch den Benutzer wählbare Funktion (4, 5) aufweist, durch welche die Kransteuerung (10) vom ersten in den zweiten Betriebsmodus wechselt und dass die Kransteuerung (10) ein automatisches hydraulisches Vorspannen wenigstens eines Schubsystems (107, 108) sowie von Hubzylindern für die Verschwenkung der Kranarme (101, 102) ausführt.

2. Kransteuerung nach Anspruch 1, **dadurch gekennzeichnet, dass** die Kransteuerung (10) an einem vorbestimmten Punkt der vorbestimmten Abfolge von Bewegungen eine vom Benutzer zu bestätigende Sicherheitsabfrage (1) ausgibt, wobei vorzugsweise der vorbestimmte Punkt der vorbestimmten Abfolge von Bewegungen bei einem Übergang von einer translatorischen in eine rotatorische Bewegungsphase der Veränderung der Krangeometrie liegt.

3. Kransteuerung nach Anspruch 2, **dadurch gekennzeichnet, dass** die Kransteuerung (10) an dem vorbestimmten Punkt die vorbestimmte Abfolge von Bewegungen der Krangeometrie pausiert, wobei vorzugsweise nach vom Benutzer bestätigter Sicherheitsabfrage (1) die Kransteuerung (10) die vorbestimmte Abfolge von Bewegungen der Krangeometrie fortsetzt.

4. Kransteuerung nach einem der Ansprüche 1 bis 3, **dadurch gekennzeichnet, dass** die Kransteuerung (10) im zweiten Betriebsmodus einen Bedienhebel (11) eines Steuerpults (6) aktiviert und durch Betätigung dieses einen Bedienhebels (11) die Krangeometrie in der vorbestimmten Abfolge von Bewegungen durch die Kransteuerung (10) veränderbar ist, wobei vorzugsweise die Kransteuerung (10) eine Geschwindigkeit mit der vorbestimmten Abfolge von Bewegungen der Krangeometrie in Abhängigkeit zu einer Auslenkung des einen Bedienhebels (11) des Steuerpults (6) steuert.

5. Kransteuerung nach Anspruch 4, **dadurch gekennzeichnet, dass** im zweiten Betriebsmodus andere Bedienhebel (31) durch die Kransteuerung (10) deaktiviert sind.

6. Kransteuerung nach einem der Ansprüche 4 oder 5, **dadurch gekennzeichnet, dass** im zweiten Betriebsmodus durch Betätigen eines Schalters - vorzugsweise eines Totmannschalters - die Kransteuerung (10) die Abfolge der Veränderungen der Krangeometrie pausiert und Bedienelemente des Steuerpults (6) - inklusive des einen Bedienhebels (11) als auch der anderen deaktivierten Bedienhebel (31) - eine ursprüngliche Funktionsbelegung zurück erhalten, wobei vorzugsweise nach Beendigung der Betätigung des Schalters die Kransteuerung (10) die Pausierung der Abfolge der Veränderungen der Krangeometrie aufhebt und den einen Bedienhebel (11) des Steuerpults (6) aktiviert und die anderen Bedienhebel (31) deaktiviert.

7. Kransteuerung nach einem der Ansprüche 1 bis 6, **dadurch gekennzeichnet, dass** die Kransteuerung (10) bei der vorbestimmten Abfolge von Bewegungen der Krangeometrie die Standsicherheit des Krans (100) oder eines Fahrzeugs (50), auf dem sich der Kran (100) befindet, überwacht.

8. Kransteuerung nach einem der Ansprüche 1 bis 7, **dadurch gekennzeichnet, dass** die Kransteuerung (10) bei der Krangeometrie die Kranspitze (109) mit einberechnet.

9. Kransteuerung nach einem der Ansprüche 1 bis 8, **dadurch gekennzeichnet, dass** die vom Benutzer zu bestätigende Sicherheitsabfrage (1) auf am Kran (100) befindliche Anbaugeräte abzielt und/oder auf einen sicherheitskritischen räumlichen Verschwenkungszustandes des Krans (100) und/oder den korrekten Rüstzustand des Krans (100), vorzugsweise einer Seilwinde (104) und einer Führung eines Lastseils (103), abzielt.

10. Kransteuerung nach einem der Ansprüche 1 bis 9, **dadurch gekennzeichnet, dass** die Kransteuerung (10) während der vorbestimmten Abfolge von Bewegungen der Krangeometrie einen zweiten Knickarm - vorzugsweise ein Fly-Jib (102) - verschwenkt und positioniert, und/oder eine Spannung eines Lastseils (103) regelt, und/oder eine Seilwinde (104) eines Lastseils (103) verschwenkt.

11. Kransteuerung nach einem der Ansprüche 1 bis 10, **dadurch gekennzeichnet, dass** die Kransteuerung (10) mit Hilfe wenigstens eines Drucksensors (52) eine Kranauslastung ermittelt und diese - in Abhängigkeit von einer Krankonfiguration - mit vorgegebenen Grenzwerten vergleicht und bei einem Überschreiten wenigstens eines der vorgegebenen Grenzwerte eine Veränderung der Krangeometrie sperrt.

12. Kransteuerung nach einem der Ansprüche 1 bis 11, **dadurch gekennzeichnet, dass** die Kransteuerung (10) in Abhängigkeit von der Krankonfiguration automatisch unterschiedliche Zwischenpositionen und auch unterschiedliche Arbeitspositionen bei der vorbestimmten Abfolge von Bewegungen der Krangeometrie ansteuert und somit die vorbestimmte Abfolge von Bewegungen der Krangeometrie eine krankonfigurationsabhängige vordefinierte Trajektorie beschreibt.

13. Kransteuerung nach einem der Ansprüche 1 bis 12, **dadurch gekennzeichnet, dass** die Kransteuerung (10) eine Position der Krangeometrie in Abhängigkeit von Sensoren (51 - 56, 61 - 66) regelt, wobei vor Erreichen der bestimmten Position des Kranes (100) - vorzugsweise der Parkierposition (2) - die Kransteuerung (10) eine Umschaltung von der Positionsregelung auf eine Druckregelung in Abhängigkeit eines Drucksensors (52) vornimmt und den Kran (100) mittels der Druckregelung in die bestimmte Position - vorzugsweise die Parkierposition (2) - verfährt.

14. Kransteuerung nach einem der Ansprüche 1 bis 13, **dadurch gekennzeichnet, dass** die Kransteuerung (10) bei der vorbestimmten Abfolge von Bewegungen der Krangeometrie eine Parkierposition (2) des Krans (100) immer aus einer vorbestimmten Drehrichtung einer Kransäule (106) des Krans (100) relativ zu einem Kransockel (206) des Krans (100) aus anfährt.

15. Kransteuerung nach einem der Ansprüche 1 bis 14, **dadurch gekennzeichnet, dass** die Kransteuerung (10) die Krangeometrie in der vorbestimmten Abfolge von Bewegungen automatisch verändert.

16. Kran (100), insbesondere Ladekran, mit einer Kransteuerung (10) nach einem der Ansprüche 1 bis 15.

17. Fahrzeug (50) mit einem Kran (100), insbesondere Ladekran, nach Anspruch 16.

## Claims

1. A crane controller (10) for a crane (100), in particular a cargo crane, having a first operating mode in which the crane (100) can be freely operated by a user by means of control commands and a second operating mode which can be activated by the user and in which the crane geometry can be changed in a predetermined sequence of movements by the crane controller (10), **characterized in that** the crane controller (10) has a menu-driven user interface (3), wherein the menu-driven user interface (3) has a function (4, 5) which can be selected by the operator, by which the crane controller (10) switches from the first into the second operating mode and that the crane controller (10) performs automatic hydraulic biasing of at least one thrust system (107, 108) and of lifting cylinders for pivotal movement of the crane arms (101, 102).

2. A crane controller as set forth in claim 1 **characterized in that** the crane controller (10) outputs a safety query (1) to be confirmed by the user at a predetermined point in the predetermined sequence of movements, wherein preferably the predetermined point in the predetermined sequence of movements is at a transition from a translatory to a rotatory movement phase of the change in crane geometry.

3. A crane controller as set forth in claim 2 **characterized in that** at the predetermined point the crane controller (10) pauses the predetermined sequence of movements of the crane geometry, wherein preferably after a safety query (1) confirmed by the user the crane controller (10) continues the predetermined sequence of movements of the crane geometry.

4. A crane controller as set forth in one of claims 1 through 3 **characterized in that** in the second operating mode the crane controller (10) activates an operating lever (11) of a control console (6) and by actuation of said one operating lever (11) the crane geometry can be altered by the crane controller (10) in the predetermined sequence of movements, wherein preferably the crane controller (10) controls a speed with the predetermined sequence of movements of the crane geometry in dependence in relation to a deflection of the one operating lever (11) of the control console (6).

5. A crane controller as set forth in claim 4 **characterized in that** in the second operating mode other operating levers (31) are deactivated by the crane controller (10).

6. A crane controller as set forth in one of claims 4 or 5 **characterized in that** in the second operating mode by actuation of a switch - preferably a dead man's switch - the crane controller (10) pauses the sequence of changes in the crane geometry and operating elements of the control console (6) - inclusive of the one operating lever (11) and also the other deactivated operating levers (31) - regain an original function assignment, wherein preferably after termination of the actuation of the switch the crane controller (10) cancels the pause of the sequence of changes to the crane geometry and activates the one operating lever (11) of the control console (6) and deactivates the other operating levers (31).

7. A crane controller as set forth in one of claims 1 through 6 **characterized in that** in the predetermined sequence of movements of the crane geometry the crane controller (10) monitors the stability of the crane (100) or a vehicle (50) on which the crane (100) is disposed.

8. A crane controller as set forth in one of claims 1 through 7 **characterized in that** the crane controller (10) also involves the crane tip (109) in the crane geometry.

9. A crane controller as set forth in one of claims 1 through 8 **characterized in that** the safety query (1) to be confirmed by the user is aimed at accessory devices disposed on the crane (100) and/or a safety-critical spatial pivotal state of the crane (100) and/or the correct equipment state of the crane (100), preferably a cable winch (104) and a guide means of a load cable (103).

10. A crane controller as set forth in one of claims 1 through 9 **characterized in that** during the predetermined sequence of movements of the crane geometry the crane controller (10) pivots and positions a second pivotal arm - preferably a fly jib (102) and/or regulates a tension of a load cable (103) and/or pivots a cable winch (104) of a load cable (103).

11. A crane controller as set forth in one of claims 1 through 10 **characterized in that** the crane controller (10) ascertains a crane loading by means of at least one pressure sensor (52) and compares same - in dependence on a crane configuration - to predetermined limit values and when at least one of the predetermined limit values is exceeded blocks a change in the crane geometry.

12. A crane controller as set forth in one of claims 1 through 11 **characterized in that** in dependence on the crane configuration the crane controller (10) automatically implements different intermediate positions and also different working positions in the predetermined sequence of movements of the crane geometry and thus the predetermined sequence of movements of the crane geometry describes a crane configuration-dependent predefined trajectory.

13. A crane controller as set forth in one of claims 1 through 12 **characterized in that** the crane controller (10) regulates a position of the crane geometry in dependence on sensors (51-56, 61-66), wherein before attainment of the given position of the crane (100) - preferably the parking position (2) - the crane controller (10) effects switching over from position regulation to pressure regulation in dependence on a pressure sensor (52) and displaces the crane (100) into the given position - preferably the parking position (2) - by means of the pressure regulation.

14. A crane controller as set forth in one of claims 1 through 13 **characterized in that** in the predetermined sequence of movements of the crane geometry the crane controller (10) always moves to a parking position (2) of the crane (100) from a predetermined direction of rotation of a crane column (106) of the crane (100) relative to a crane base (206) of the crane (100).

15. A crane controller as set forth in one of claims 1 through 14 **characterized in that** the crane controller (10) automatically changes the crane geometry in the predetermined sequence of movements.

16. A crane (100), in particular a cargo crane, having a crane controller (10) as set forth in one of claims 1 through 15.

17. A vehicle (50) having a crane (100), in particular a cargo crane, as set forth in claim 16.

## Revendications

1. Commande de grue (10) pour une grue (100), en particulier une grue de chargement, avec un premier mode de fonctionnement, dans lequel la grue (100) peut être librement commandée par un utilisateur par des ordres de commande, et un second mode de fonctionnement activable par l'utilisateur, dans lequel la géométrie de la grue est modifiable dans une suite prédéterminée de mouvements par la commande de grue (10), **caractérisée en ce que** la commande de grue (10) présente une interface utilisateur (3) guidée par des menus, dans laquelle l'interface utilisateur (3) guidée par des menus présente une fonction (4, 5) pouvant être choisie par l'utilisateur, par laquelle la commande de grue (10) passe du premier au second mode de fonctionnement, et la commande de grue (10) réalise une précontrainte hydraulique automatique d'au moins un système de poussée (107, 108) ainsi que de cylindres de levage pour le pivotement des bras de grue (101, 102).

2. Commande de grue selon la revendication 1, **caractérisée en ce que** la commande de grue (10) émet au niveau d'un point prédéterminé de la suite prédéterminée de mouvements une interrogation de sécurité (1) à confirmer par l'utilisateur, dans laquelle de préférence le point prédéterminé de la suite prédéterminée de mouvements se situe près d'un passage d'une phase de mouvement translatoire à une phase de mouvement rotative de la modification de la géométrie de grue.

3. Commande de grue selon la revendication 2, **caractérisée en ce que** la commande de grue (10) interrompt au niveau du point prédéterminé la suite prédéterminée de mouvements de la géométrie de grue, dans laquelle de préférence après l'interrogation de sécurité (1) confirmée par l'utilisateur la commande de grue (10) poursuit la suite prédéterminée de mouvements de la géométrie de grue.

4. Commande de grue selon l'une des revendications 1 à 3, **caractérisée en ce que** la commande de grue (10) active dans le second mode de fonctionnement un levier de commande (11) d'un pupitre de commande (6) et par actionnement dudit un levier de commande (11) la géométrie de grue peut être modifiée dans la suite prédéterminée de mouvements par la commande de grue (10), dans laquelle de préférence la commande de grue (10) commande une vitesse avec la suite prédéterminée de mouvements de la géométrie de grue en fonction d'une déviation de l'un levier de commande (11) du pupitre de commande (6).

5. Commande de grue selon la revendication 4, **caractérisée en ce que** d'autres leviers de commande (31) sont désactivés par la commande de grue (10) dans le second mode de fonctionnement.

6. Commande de grue selon l'une des revendications 4 ou 5, **caractérisée en ce que** dans le second mode de fonctionnement par actionnement d'un commutateur, de préférence d'un commutateur d'homme mort, la commande de grue (10) interrompt la suite des modifications de la géométrie de grue et des éléments de commande du pupitre de commande (6), y compris de l'un levier de commande (11) mais aussi des autres leviers de commande (31) désactivés, reçoivent en retour une affectation des fonctions d'origine, dans laquelle de préférence à la fin de l'actionnement du commutateur la commande de grue (10) lève l'interruption de la suite des modifications de la géométrie de grue et active l'un levier de commande (11) du pupitre de commande (6) et désactive les autres leviers de commande (31).

7. Commande de grue selon l'une des revendications 1 à 6, **caractérisée en ce que** la commande de grue (10) surveille pour la suite prédéterminée de mouvements de la géométrie de grue la stabilité statique de la grue (100) ou d'un véhicule (50) sur lequel la grue (100) se trouve.

8. Commande de grue selon l'une des revendications 1 à 7, **caractérisée en ce que** la commande de grue (10) intègre pour la géométrie de grue la pointe de grue (109).

9. Commande de grue selon l'une des revendications 1 à 8, **caractérisée en ce que** l'interrogation de sécurité (1) à confirmer par l'utilisateur vise des accessoires se trouvant sur la grue (100) et/ou vise un état de pivotement spatial critique en termes de sécurité de la grue (100) et/ou l'état d'équipement correct de la grue (100), de préférence d'un treuil (104) et d'un guidage d'un câble porteur (103).

10. Commande de grue selon l'une des revendications 1 à 9, **caractérisée en ce que** la commande de grue (10) pivote et positionne pendant la suite prédéterminée de mouvements de la géométrie de grue un second bras articulé, de préférence une fléchette (102), et/ou régule une tension d'un câble porteur (103) et/ou pivote un treuil (104) d'un câble porteur (103).

11. Commande de grue selon l'une des revendications 1 à 10, **caractérisée en ce que** la commande de grue (10) détermine à l'aide d'au moins un capteur de pression (52) une utilisation de la grue et compare celle-ci, en fonction d'une configuration de grue, à des valeurs limites prescrites et en cas de dépassement d'au moins une des valeurs limites prescrites bloque une modification de la géométrie de grue.

12. Commande de grue selon l'une des revendications 1 à 11, **caractérisée en ce que** la commande de grue (10) commande en fonction de la configuration de grue automatiquement différentes positions intermédiaires et aussi différentes positions de travail pour la suite prédéterminée de mouvements de la géométrie de grue et ainsi la suite prédéterminée de mouvements de la géométrie de grue décrit une trajectoire prédéfinie dépendant de la configuration de grue.

13. Commande de grue selon l'une des revendications 1 à 12, **caractérisée en ce que** la commande de grue (10) régule une position de la géométrie de grue en fonction de capteurs (51 - 56, 61 - 66), dans laquelle avant l'atteinte de la position déterminée de la grue (100), de préférence la position de stationnement (2), la commande de grue (10) entreprend une commutation de la régulation de position à une régulation de pression en fonction d'un capteur de pression (52) et déplace la grue (100) à l'aide de la régulation de pression dans la position déterminée, de préférence la position de stationnement (2).

14. Commande de grue selon l'une des revendications 1 à 13, **caractérisée en ce que** la commande de grue (10) démarre pour la suite prédéterminée de mouvements de la géométrie de grue une position de stationnement (2) de la grue (100) toujours à partir d'un sens de rotation prédéterminé d'une colonne de grue (106) de la grue (100) par rapport à un socle de grue (206) de la grue (100).

15. Commande de grue selon l'une des revendications 1 à 14, **caractérisée en ce que** la commande de grue (10) modifie automatiquement la géométrie de grue dans la suite prédéterminée de mouvements.

16. Grue (100), en particulier grue de chargement, avec une commande de grue (10) selon l'une des revendications 1 à 15.

17. Véhicule (50) avec une grue (100), en particulier une grue de chargement, selon la revendication 16.
